# EUROPÄISCHE PATENTANMELDUNG

(11) **EP 0 537 821 A2**
(43) Veröffentlichungstag der Anmeldung: **21.04.1993**
(21) Anmeldenummer: 92202984.8
(22) Anmeldetag: 29.09.1992
(51) Int. Cl.: H04L 12/24, H04L 12/28, H04L 12/46, H04Q 3/00

(54) **Hierarchisches Netzmanagementsystem**

(30) Priorität: 09.10.1991 DE 4133385
(71) Anmelder: Philips Patentverwaltung GmbH, 22335 Hamburg (DE); Philips Electronics N.V., 5621 BA Eindhoven (NL)
(72) Erfinder: Fuchsreiter, Johannes, c/o Philips, W-2000 Hamburg 1 (DE); Schmidt, Konrad, c/o Philips Patentverwaltung, W-2000 Hamburg 1 (DE); Kasseckert, Rudolf, c/o Philips Patentverwaltung, W-2000 Hamburg 1 (DE); Neumann, Walter, c/o Philips Patentverwaltung, W-2000 Hamburg 1 (DE)
(74) Vertreter: Volmer, Georg, Dipl.-Ing.

(57) **Zusammenfassung**

Es wird ein hierarchisches Netzmanagementsystem beschrieben, das Konzentratoren (2A bis 5A) in den einzelnen Ebenen (E1 bis E3) der Hierarchie enthält sowie einstellbare Schnittstellen in den Konzentratoren für Punkt-zu-Punkt- und Bus-Verbindungen aufweist.

Damit bekannte Systeme mit diesen Eigenschaften bei geringen Veränderungen in die Lage versetzt werden, Netzelemente einer Linienstruktur zu überwachen, ist eine Schnittstelle für eine Busverbindung auf der Masterseite vorgesehen, die Laufzeiten berücksichtigt und an die ein Übertragunskanal anschließbar ist, der aus einer Hin- und einer Rückleitung (a5, b5) besteht und an dessen Leitungen parallel adressierbare Geräte (8A, 8B, 8C) anschließbar sind. Außerdem ist für jedes adressierbare Gerät (8A, 8B, 8C) der Parallelschaltung einer steuerbarer Umschalter (A8, B8, C8) vorgesehen, der in der Rückleitung (b5) des Übertragungskanals angeordnet ist.

## Beschreibung

Die Erfindung betrifft ein hierarchisches Netzmanagementsystem mit
1a) Konzentratoren zwischen den einzelnen Ebenen der Hierarchie und
1b) Schnittstellen in den Konzentratoren für Punkt-zu-Punkt- und Bus-Verbindungen.

Ein Managementsystem mit diesen Merkmalen ist z.B. in der CCITT-Empfehlung M.30 (vgl. das zugehörige Blaubuch) vorgesehen, die im folgenden mit (D1) zitiert werden wird. Konkretisierungen solcher Managementsysteme sind z.B. der DE 34 36 441 A1 und einem Datenblatt der Philips Kommunikations Industrie AG (SISA Kommunikationsnetz für Netzmanagement, März 1991) beschrieben. Diese beiden Dokumente sollen im folgenden mit (D2) und (D3) zitiert werden.

Speziell gilt für das Managementsystem nach (D3), daß die zu überwachenden Netzelemente über eine serielle Schnittstelle zu verfügen haben, über die Meldungen des Netzelementes innerhalb des Systems an Netzbeobachtungsplätze übertragen werden. Da alle Leitungen des Systems bidirektional sind, können Steuerbefehle und auch Benutzerdaten zu den zu überwachenden Netzelementen gesendet werden. Der Netzbeobachtungsplatz, bei dem die Meldungen aller zu überwachenden Netzelemente zusammenlaufen, soll hier zentraler Beobachtungsplatz genannt werden.

Der Betreiber eines Nachrichtenübertragungsnetzes hat mit Hilfe eines solchen Managementsystems die Möglichkeit, sich kontinuierlich durch Auswertung der am zentralen Beobachtungsplatz ankommenden Protokolle ein Zustandsbild über sein Übertragungsnetz zu verschaffen. Zu diesem Zustandsbild gehören unter anderem differenzierte Aussagen über Fehlfunktionen des Übertragungsnetzes sowie über die Qualität der Übertragung. Der Netzbetreiber kann auf Grund dieser Angaben rechtzeitig und gezielt z.B. Ersatzschaltmaßnahmen ergreifen, so daß die Kapazität seines Übertragungsnetzes immer optimal nutzbar bleibt.

Die Kommunikation des Managementsystems nach (D3) basiert auf dem sogenannten Master-Slave-Prinzip. An einen Konzentrator als Master sind bis zu dreißig Konzentratoren oder Netzelemente als Slaves anschließbar. Der Master fragt seine Slaves mit Hilfe von Adressen nach Telegrammen ab und leitet diese Telegramme an den Konzentrator oder den Netzbeobachtungsplatz weiter, von dem er selbst mit einer Adresse abgefragt wird.

Auf diese Weise ergibt sich eine hierarchische Struktur, die sich in sogenannte Adressierungsebenen gliedert. Diese hierarchische Struktur wird in (D2) Baumstruktur genannt. In einer Adressierungsebene - kurz Ebene genannt - liegt ein Konzentrator als Master, der mindestens zwei angeschlossene Geräte über Adressen abfragt. Unter Gerät soll hier entweder ein Netzelement oder ein Konzentrator verstanden werden. Ein Netzelement ist ein Bestandteil des zu überwachenden Übertragungsnetzes.

Nachteilig des in (D3) beschriebenen SISA-Systems ist es, daß die Zahl der Ebenen beschränkt ist, und zwar auf zehn. Als Folge hiervon können z.B. bestenfalls fünf Netzelemente einer Linienstruktur wie z.B. die Zwischenregeneratoren einer Übertragungsstrecke mit dem System überwacht werden. Der Anschluß von Zwischenregeneratoren über eine Busschnittstelle mit den elektrischen Eigenschaften nach V.11 (vgl. (D3)) an einen Konzentrator ist nicht möglich.

Punkt-zu-Punkt-Verbindungen, mit denen größere Entfernungen überbrückt werden können, sind jedoch nur für die Verbindung von Konzentratoren untereinander vorgesehen. Daher müßten bei jedem Zwischenregenerator einer Strecke zwei Konzentratoren untergebracht werden. Einer, der über eine Punkt-zu-Punkt-Verbindung mit dem Konzentrator der nächst höheren Ebene verbunden ist und außerdem über eine Bus-Verbindung verfügt, an die ein zweiter Konzentrator und der Zwischengenerator angeschlossen sind. Der zweite Konzentrator ist über eine Punkt-zu-Punkt-Verbindung mit dem ersten Konzentrator des nächsten Zwischengenerators verbunden. Spätestens beim fünften Zwischengenerator wäre damit die Anzahl der zulässigen Ebenen erreicht.

Der Erfindung liegt die Aufgabe, den geschilderten Nachteil bei bekannten Systemen der eingangs genannten Art mit möglichst wenig Aufwand zu beheben. Diese Aufgabe wird durch folgende Maßnahmen gelöst:
1c) eine Schnittstelle für eine Busverbindung auf der Masterseite, die Laufzeiten berücksichtigt und an die ein Übertragungskanal anschließbar ist, der aus einer Hin- und einer Rückleitung besteht und an dessen Leitung parallel adressierbare Geräte angeschlossen sind,
1d) einen für jedes adressierbare Gerät der Parallelschaltung vorgesehenen steuerbaren Umschalter, der in der Rückleitung des Übertragungskanals angeordnet ist.

Erfindungsgemäß braucht ein Konzentrator z.B. des Systems nach (D3) nur um eine (einstellbare) Schnittstelle für eine Bus-Verbindung erweitert zu werden, die auch Laufzeiten berücksichtigt. Diese Erweiterung ist bei dem heutigen Stand der Technologie unter Umständen nur durch ein Software- änderung zu bewerkstelligen.

Übertragungsstrecken, deren Zwischenregeneratoren mit dem erfindungsgemäßen Managementsystem überwacht werden sollen, haben in der Regel ohnehin einen bidirektionalen Kanal für die Überwachung, wie z.B. die EP 01 23 132 B1 zeigt. Bei einer solchen Übertragungsstrecke wären die Zwischenregeneratoren lediglich mit einem steuerbaren Umschalter in der Sendeleitung des Kanals zu versehen, damit beim Aussenden von Daten dieser Vorgang nicht von anderen Geräten gestört werden kann.

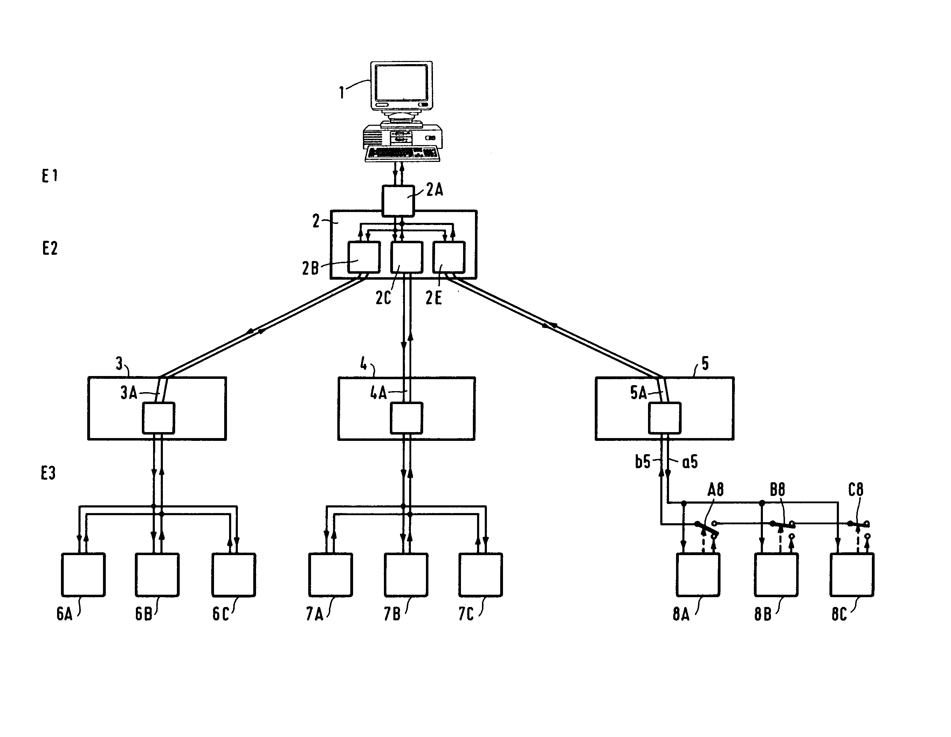

Ein Unteranspruch richtet sich auf einen Konzentrator für das erfindungsgemäße System, ein weiterer auf ein Netzelement, das mit dem erfindungsgemäßen System überwacht werden soll. Anhand der Figur soll nun ein Ausführungsbeispiel der Erfindung näher erläutert werden.

Das System nach der Figur hat nur einen Beobachtungsplatz, nämlich den zentralen Beobachtungsplatz 1. Es enthält insgesamt drei Ebenen E1, E2 und E3. In den Ebenen liegen Konzentratoren 2A beziehungsweise 2B, 2C und 2E sowie Netzelemente 6A, 6B, 6C, 7A, 7B, 7C, 8A, 8B und 8C. In die Netzelemente integriert sind die nötigen Schnittstellen, die den Datenaustausch mit den angeschlossenen Konzentratoren ermöglichen. Grundsätzlich können die Netzelemente auch wiederum durch Konzentratoren ersetzt werden. Die Konzentratoren 2B, 2C, 2E, 3A, 4A und 5A gehören der gleichen Ebene an, weil die Konzentratoren 2B, 2C und 2E jeweils nur über einen Slave verfügen, der an ihre Masterseite angeschlossen ist.

Die Konzentratoren selbst sind Platinen mit einstellbaren Schnittstellen. So ist beim Konzentrator 2A auf seiner Slaveseite eine Schnittstelle für eine Punkt-zu-Punkt-Verbindung eingestellt, während auf seiner Masterseite eine Schnittstelle für eine Bus-Verbindung eingestellt ist. Genauere Angaben über die Schnittstellen findet man (D3).

Bei den Konzentratoren 2B, 2C und 2E verhält es sich umgekehrt: Auf ihrer Slave-Seite ist eine Schnittstelle für eine Bus-Verbindung während auf ihrer Masterseite eine Schnittstelle für Punkt-zu-Punkt-Verbindung eingestellt ist. Die Schnittstelle der Konzentratoren 3A, 4A und 5A sind derart eingestellt, daß sie eine Punkt-zu-Punkt-Verbindung auf der Slave-Seite ermöglichen. Auf der Masterseite sind die Schnittstellen so eingestellt, daß die Konzentratoren 3A und 4A über eine Bus-Verbindung mit den adressierbaren Netzelementen verbindbar sind, während auf der Masterseite des Konzentrators 5A eine Busschnittstelle eingestellt ist, die den Anschluß eines beliebig langen Übertragungskanals a5, b5 ermöglicht. Der Übertragungskanal darf deshalb beliebig lang sein, weil die eingestellte Schnittstelle die Laufzeiten auf dem Kanal mit berücksichtigt. Die angeschlossenen Netzelemente müssen eine besondere Schnittstelle enthalten, deren Hauptbestandteil eine nicht gezeigte Steuerung sowie einen steuerbaren Schalter A8, B8 und C8 enthält. Der steuerbare Umschalter liegt in der Rückleitung des Übertragungskanals und wird dann betätigt, wenn das betreffende Netzelement seine Adresse erkannt hat, die vom Konzentrator 5A ausgesendet worden ist. In diesem Fall wird der Schalter so gelegt, daß das nun sendene Netzelement das einzige Netzelement ist, das an die Rückleitung b5 des Übertragunskanals angeschlossen ist. Grundsätzlich können die Netzelemente 8A, 8B und 8C auch Konzentratoren sein, an die wiederum über bekannte Bus-Verbindungen weitere Netzelemente angeschlossen sind.

Alle Konzentratoren des in der Figur gezeigten Systems sind derart ausgebildet, daß bei ihnen masterseitig und slaveseitig Schnittstellen eingestellt werden können, die so beschaffen sind wie die Schnittstellen der Netzelemente A8, B8 und C8 beziehungsweise die masterseitige Schnittstelle des Konzentrators 5A. Wie eine Schnittstelle nach den gemachten Angaben zu konkretisieren ist, kann der Fachmann der angegebenen Literatur entnehmen.

## Patentansprüche

1. Hierarchisches Netzmanagementsystem mit 1a) Konzentratoren (2A bis 5A) in den einzelnen Ebenen (E1 bis E3) der Hierarchie, 1b) Schnittstellen in den Konzentratoren (2A bis 5A) für Punkt-zu-Punkt- und Bus-Verbindungen,
gekennzeichnet durch
1c) eine Schnittstelle für eine Busverbindung auf der Masterseite, die Laufzeiten berücksichtigt und an die ein Übertragungskanal (a5, b5) anschließbar ist, der aus einer Hin- und einer Rückleitung (a5, b5) besteht und an dessen Leitungen parallel adressierbare Geräte (8A, 8B, 8C) angeschlossen sind,
1d) einen für jedes adressierbare Gerät (8A, 8B, 8C) der Parallelschaltung vorgesehenen steuerbaren Umschalter (A8, B8, C8), der in der Rückleitung (b5) des Übertragungskanals angeordnet ist.

2. Konzentrator für ein System nach Anspruch 1, dadurch gekennzeichnet,
daß er eine Schnittstelle enthält, die einen steuerbaren Umschalter (A8, B8, C8) für den Konzentrator auf der Slave-Seite vorsieht, der mit der Adresse für den Konzentrator gesteuert wird.

3. Netzelement für ein Übertragungsnetz, das mit einem System nach Anspruch 1 überwacht werden soll,
dadurch gekennzeichnet,
daß es eine Schnittstelle auf der Slave-Seite enthält, die einen steuerbaren Umschalter vorsieht, der mit der Adresse für das Netzelement gesteuert wird.

4. Konzentrator nach Anspruch 2,
gekennzeichnet
durch eine Schnittstelle für eine Busverbindung auf der Masterseite, die Laufzeiten berücksichtigt und an die ein Übertragungskanal (a5, b5) beliebiger Länge anschließbar ist, der aus einer Hin- und Rückleitung besteht.
